# DEMANDE DE BREVET EUROPEEN

(11) **EP 3 699 473 A1**
(43) Date de publication de la demande: **26.08.2020**
(21) Numéro de dépôt: 20151485.8
(22) Date de dépôt: 13.01.2020
(51) Int. Cl.: F16L 37/52

(54) **DISPOSITIF DE LIAISON ARTICULEE DE DEUX COMPOSANTS TUBULAIRES**

(30) Priorité: 20.02.2019 FR 1901697
(71) Demandeur: Akwel Vannes France, 56000 Vannes (FR)
(72) Inventeur: ROBINAULT, Michel, 56860 SENE (FR); GATEAU, David, 56390 LOCMARIA GRAND CHAMP (FR); GUERRY, Pascal, 68581 SEPPOIS LE HAUT (FR); SIMON, Hervé, 56890 SAINT AVE (FR)

(57) **Abrégé**

Le dispositif (10) comprend des premier (12) et deuxième (14) composants tubulaires autour d'un axe principal (XX) qui comprennent respectivement un premier organe d'articulation mâle (16) pourvu d'une tête d'extrémité (18) en forme de segment sphérique et un deuxième organe d'articulation femelle (50) pourvu d'un siège complémentaire recevant de manière mobile à l'intérieur la tête d'extrémité (18) du premier organe (16). Le premier organe (16) est configuré pour être logé au moins partiellement à l'intérieur du premier composant (12) et pour être assemblé au deuxième composant (12) au travers du deuxième organe (50). Le deuxième organe (50) est configuré pour être monté autour du deuxième composant (14) et assemblé au premier composant (12) par-dessus le deuxième organe (16) de telle sorte que les deux composants tubulaires (12, 14) soient liés entre eux par l'entrecroisement réciproque des deux organes d'articulation (16, 50).

## Description

### Domaine technique.

La présente invention concerne un dispositif de liaison articulée, en particulier pour relier deux composants tubulaires, autorisant des mouvements linéaire, angulaire et rotatif entre eux. Elle s'applique plus particulièrement mais non exclusivement au domaine technique de l'automobile, par exemple, pour le raccordement entre eux de façon articulée d'un conduit d'admission d'air en sortie d'un turbocompresseur et d'un échangeur, tel qu'un échangeur de refroidissement air/air ou air/liquide d'un moteur à combustion interne.

En particulier, un tel conduit d'admission d'air est, de façon classique, réalisé dans un matériau plastique rigide ou quasi-rigide, par exemple une matière thermoplastique. Le conduit d'admission n'est pas prévu pour réaliser des mouvements dynamiques en fonctionnement, mais est plutôt essentiellement fixe et, selon l'utilisation prévue, doit au maximum effectuer de petits mouvements typiques dus à la dilatation thermique en fonctionnement par exemple ou lors de l'assemblage pour absorber les tolérances de positionnement relatif des pièces entre elles.

Afin d'absorber les dispersions d'assemblage, de montage, et de dilatation en fonctionnement, le conduit d'admission d'air est par exemple réalisé par assemblage de composants souples tels que des tubes et manchons élastomères et de composants plus rigides tels que des tubulures thermoplastiques. Ces conduits sont assemblés sur les différents organes moteur en autorisant une certaine flexibilité permettant ainsi de reprendre les dispersions.

Or, ces raccordements successifs de composants souples et rigides présentent un risque de générer des fuites et d'engendrer des contraintes, déformations supplémentaires, sous pression, sur les différents éléments de fixation auxquels ils peuvent être reliés.

Il existe ainsi un besoin d'une liaison articulée, en particulier entre deux composants tubulaires rigides, qui permette un rattrapage des jeux en absorbant les différentes tolérances entre les composants de la motorisation sur lequel ce conduit peut être assemblé (turbo, échangeur, boîtier papillon, pattes de fixation sur alternateur, etc.) ainsi que les tolérances de réalisation du conduit lui-même, notamment par des mouvements linéaire et de rotation, angulaire et axial.

En outre, une telle liaison articulée doit supporter des contraintes inhérentes à la spécificité des conduits d'admission d'air, comme les tenues aux pressions, températures, étanchéité (air, vapeur d'huile et carburant), mouvements, tolérances d'assemblage et de dilatation du moteur en fonctionnement.

### Technique antérieure.

On connaît déjà, notamment du document KR20130001142U, un raccord articulé pour relier entre eux des premier et deuxième tubes de raccordement métalliques. Afin de réaliser une liaison linéaire et rotative des deux tubes ensemble, le raccord comprend encore un organe de forme générale sphérique interposé entre les deux tubes coopérant avec l'un des tubes pour réaliser une liaison rotule et avec l'autre des tubes pour réaliser une liaison linéaire. En outre, afin de maintenir les différentes pièces ensemble, le raccord comprend également une bague de fixation qui est maintenue à l'aide d'un jeu de vis.

Il existe donc un besoin d'un raccord de liaison articulée qui permette de relier deux composants tubulaires entre eux tout en autorisant des mouvements linéaire et en rotation, facile à assembler sans requérir d'outils ni nécessiter d'opération de soudage ou de vissage additionnelle.

### Résumé de l'invention

A cet effet, l'invention a pour objet un dispositif de liaison articulée, du type comprenant des premier et deuxième composants tubulaires autour d'un axe principal, les premier et deuxième composants comprenant respectivement un premier organe séparable d'articulation mâle pourvu d'une tête d'extrémité en forme de segment sphérique et un deuxième organe séparable d'articulation femelle pourvu d'un siège complémentaire recevant de manière mobile à l'intérieur la tête d'extrémité du premier organe, **caractérisé en ce que** le premier organe est configuré pour être logé au moins partiellement à l'intérieur du premier composant et pour être assemblé au deuxième composant au travers du deuxième organe, **en ce que** le deuxième organe est configuré pour être monté autour du deuxième composant et assemblé au premier composant par-dessus le premier organe de telle sorte que les deux composants tubulaires soient liés entre eux par l'entrecroisement réciproque des deux organes d'articulation **et en ce que** la tête d'extrémité est pourvue d'une portion à expansion radiale élastique pour son assemblage autour du deuxième composant et le deuxième composant comprend un relief aval formant un bourrelet ou collet de retenue axiale de la tête d'extrémité.

Grâce à l'invention, l'entrecroisement réciproque des deux organes d'articulation entre eux permet de réaliser un assemblage fiable sans nécessiter d'opérations complexes mais uniquement par exemple des opérations mécaniques simples tels que des opérations d'encliquetage.

Comme on le comprend facilement, le dispositif conforme à l'invention présente un certain nombre d'avantages. Son montage et son démontage s'effectuent sans aucun outil, vu qu'il ne comporte ni tige filetée, ni écrou pour l'assemblage, mais seulement des organes mâle et femelle susceptibles de s'engager l'un dans l'autre et d'être libérés par un effort de traction suffisant pour surmonter la force d'assemblage. De plus, comme les organes présentent des surfaces en contact sphérique, ce dispositif de liaison autorise des déplacements angulaires importants.

Par convention, dans la présente demande, les termes « amont » et « aval » sont définis par rapport au sens de circulation du fluide dans l'exemple illustré du dispositif, à savoir dans le sens allant du premier composant vers le deuxième composant selon l'axe principal. De même, par convention dans la présente demande, les termes « intérieur » et « extérieur », « inférieur » et « supérieur », et « interne » et « externe » sont définis radialement par rapport à l'axe principal. Ainsi, un composant tubulaire s'étendant selon l'axe principal comporte une face intérieure tournée vers l'axe principal et une surface extérieure, opposée à sa surface intérieure.

Un dispositif de liaison articulée selon l'invention peut comporter l'une ou plusieurs des caractéristiques suivantes listées ci-après.

Dans un mode de réalisation préféré, le dispositif comprend des moyens d'indexation angulaire des deux composants tubulaires selon une direction circonférentielle configurés pour orienter et/ou immobiliser en rotation relativement les deux composants.

Dans un autre mode de réalisation préféré, la tête d'extrémité est pourvue d'une portion à expansion radiale élastique pour son assemblage autour du deuxième composant et le deuxième composant comprend un relief aval formant un bourrelet ou collet de retenue axiale de la tête d'extrémité.

Dans un autre mode de réalisation préféré, le deuxième organe comprend une portion à expansion radiale élastique pour son assemblage sur le premier composant et le premier composant comprend un rebord en saillie radiale externe de retenue axiale du deuxième organe.

Dans un autre mode de réalisation préféré, le premier organe est configuré pour se déplacer axialement le long du deuxième composant à l'intérieur d'une course prédéfinie entre des positions extrêmes amont et aval.

Dans un autre mode de réalisation préféré, le premier organe comprend une paroi interne munie d'un épaulement radial configuré pour venir en butée contre un premier relief amont formé sur le deuxième composant.

Dans un autre mode de réalisation préféré, le deuxième composant comprend un deuxième relief aval de retenue axiale du premier organe mâle.

Dans un autre mode de réalisation préféré, le deuxième organe comporte un corps annulaire en forme générale de segment sphérique.

Dans un autre mode de réalisation préféré, le premier composant est pourvu d'une extrémité évasée en forme de segment sphérique configurée pour s'étendre, dans l'état monté, sensiblement dans le prolongement axial du segment sphérique du deuxième organe.

Dans un autre mode de réalisation préféré, le premier organe mâle et le premier composant comprennent une configuration mutuelle apte à réaliser une première liaison d'étanchéité amont du dispositif.

Dans un autre mode de réalisation préféré, le premier organe mâle et le deuxième composant comprennent une configuration mutuelle apte à réaliser une deuxième liaison d'étanchéité aval du dispositif.

Dans un autre mode de réalisation préféré, le premier composant et le deuxième organe femelle comprennent chacun un bord d'extrémité délimitant circonférentiellement des éléments d'encastrement complémentaires en saillie et en creux configurés pour que les bords d'extrémités puissent s'engager mutuellement l'un dans l'autre et être assemblés par une action rotative de verrouillage d'une fraction de tour prédéfinie.

### Brève description des dessins

D'autres caractéristiques et avantages de l'invention apparaîtront à la lumière de la description qui suit, faite en référence aux dessins annexes dans lesquels :
**Fig.1**

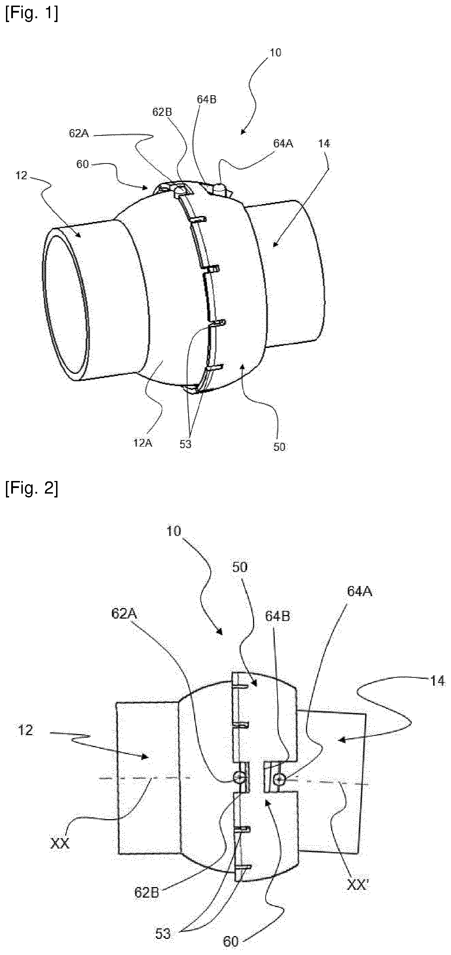

   [fig.1] représente une vue en perspective d'un dispositif de liaison articulée selon un premier mode de réalisation dans une configuration assemblée ;
**Fig.2**
   [fig.2] représente une vue en perspective du dispositif de la figure 1 dans une position inclinée ;
**Fig.3**

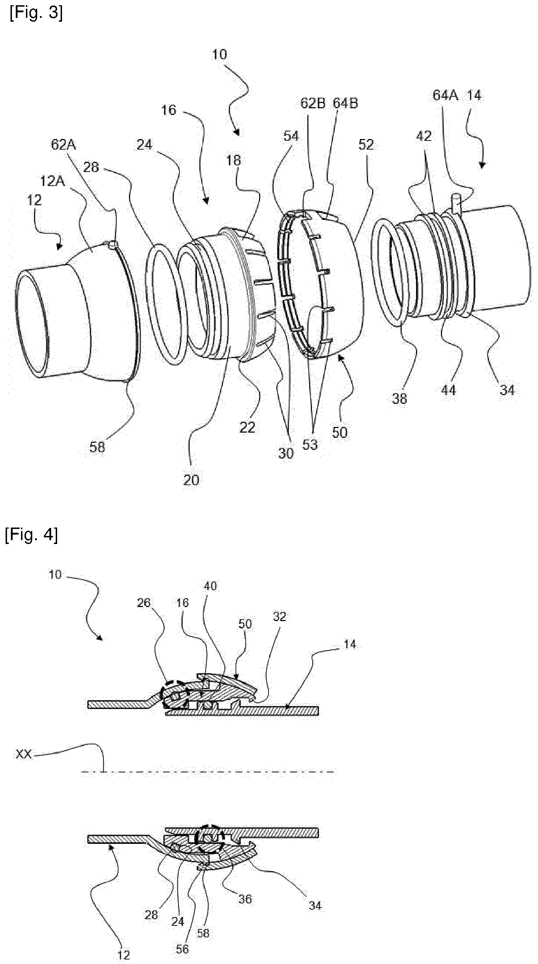

   [fig.3] représente une vue en perspective du dispositif de la figure 1 dans une configuration éclatée ;
**Fig.4**
   [fig.4] représente une vue en coupe axiale du dispositif de la figure 1 dans une première position ;
**Fig.5**

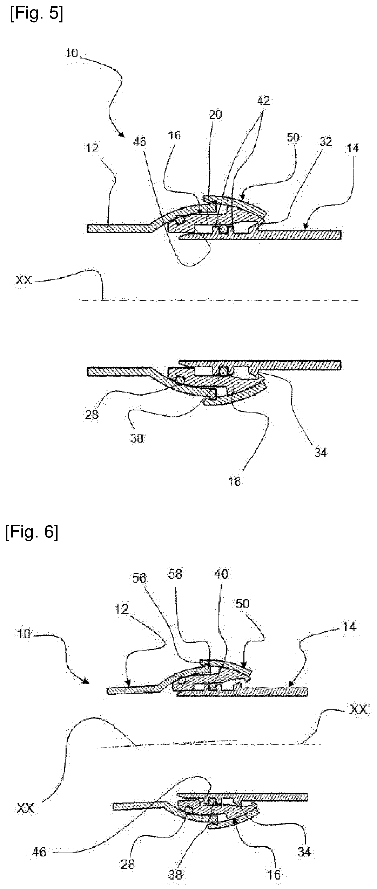

   [fig.5] représente une vue en coupe axiale du dispositif de la figure 1 dans une deuxième position translatée ;
**Fig.6**
   [fig.6] représente une vue en coupe axiale du dispositif de la figure 1 dans une troisième position inclinée ;
**Fig.7**

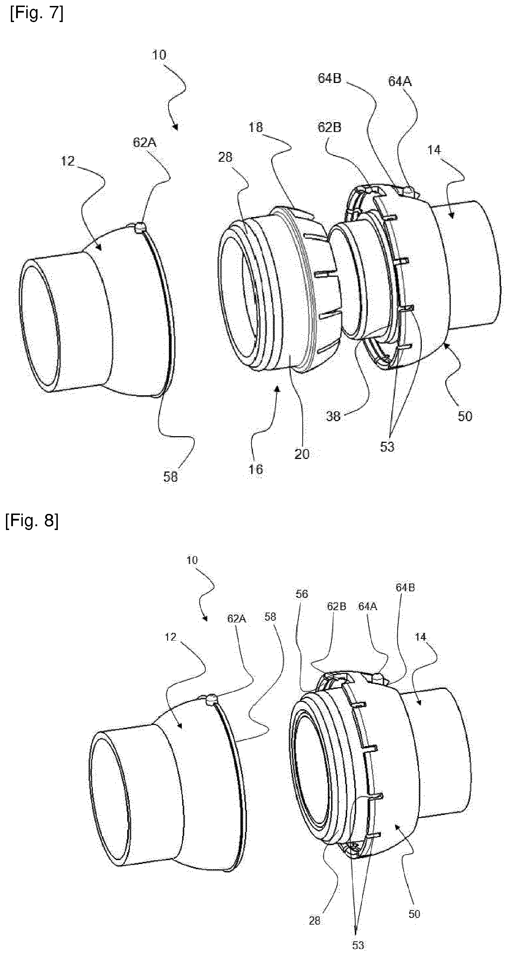

   [fig.7] représente une première étape de montage du dispositif de la figure 1 ;
**Fig.8**
   [fig.8] représente une deuxième étape de montage du dispositif de la figure 1 ;
**Fig.9**

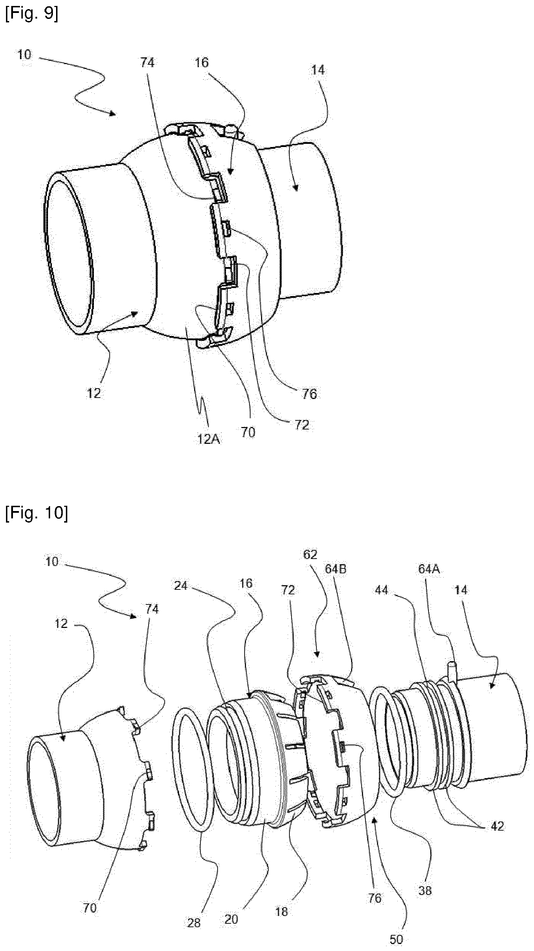

   [fig.9] représente une vue en perspective d'un dispositif de liaison selon un deuxième mode de réalisation dans une configuration montée ;
**Fig.10**
   [fig.10] représente une vue en perspective du dispositif de la figure 9 dans une configuration éclatée ;
**Fig.11**

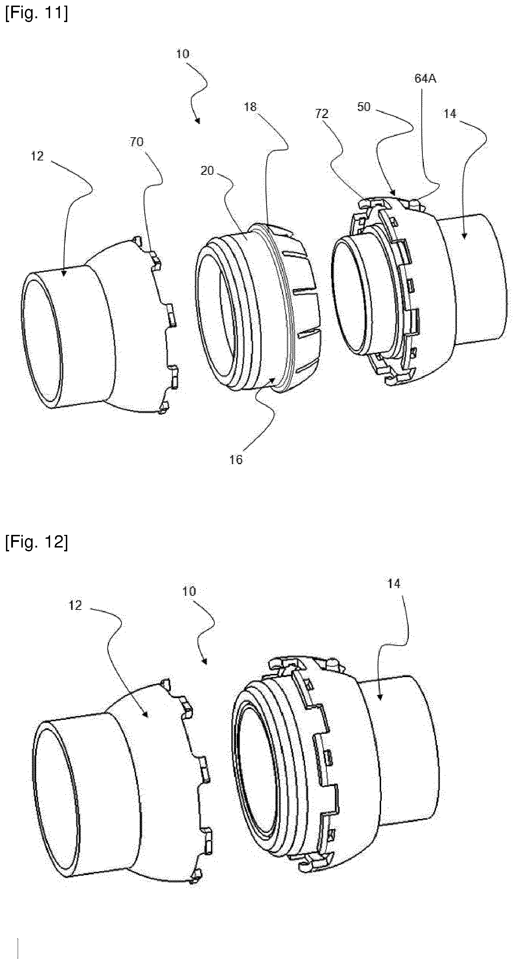

   [fig.11] illustre une première étape de montage du dispositif de la figure 9;
**Fig.12**
   [fig.12] illustre une deuxième étape de montage du dispositif de la figure 9.

### Description des modes de réalisation

On a représenté notamment sur **la** **figure 1** un dispositif de liaison articulée selon un premier mode de réalisation de l'invention. Le dispositif est désigné par la référence générale 10. Ce premier mode de réalisation va être décrit en détail en référence aux **figures 1 à 8****.**

Comme cela apparaît clairement sur **les** **figures 1 et 2****,** le dispositif 10 comprend un premier composant tubulaire 12 et un deuxième composant tubulaire 14 reliés l'un à l'autre de façon articulée autour d'un axe principal XX. Dans l'exemple illustré, le premier composant tubulaire 12 est par exemple un élément de conduit d'admission d'air (non représenté) et le deuxième composant tubulaire 14 est une deuxième partie du conduit d'admission d'air.

Par convention, dans la présente demande, les termes « amont » et « aval » sont définis par rapport au sens de circulation du fluide dans l'exemple illustré du dispositif 10, à savoir dans le sens allant du premier composant 12 vers le deuxième composant 14 selon l'axe principal XX. De même, par convention dans la présente demande, les termes « intérieur » et « extérieur », «inférieur» et « supérieur », et « interne » et « externe » sont définis radialement par rapport à l'axe principal XX. Ainsi, un composant tubulaire s'étendant selon l'axe principal XX comporte une face intérieure tournée vers l'axe principal XX et une surface extérieure, opposée à sa surface intérieure.

Comme cela est illustré sur **la** **figure 3****,** le premier composant 12 est associé à un premier organe d'articulation mâle 16 pourvu d'une tête d'extrémité 18 en forme de segment sphérique.

Dans l'exemple illustré, le premier organe mâle 16 comprend un corps de forme tubulaire étagée comportant une partie tubulaire aval formant la tête d'extrémité 18 et une partie tubulaire amont 20 en forme d'embout cylindrique, de diamètre inférieur. Les deux parties 18 et 20 sont par exemple délimitées axialement par une paroi transversale annulaire 22 formant un épaulement externe.

De préférence, l'organe mâle 16 est configuré pour être inséré axialement à l'intérieur du premier composant 12. A cet effet, le premier composant 12 comporte un corps principal en forme générale tubulaire cylindrique pourvu d'une portion d'extrémité libre 12A conformée pour recevoir l'embout cylindrique 20 de l'organe mâle 16. Comme cela est illustré sur **la** **figure 3****,** le premier composant 12 comporte une portion d'extrémité évasée 12A en forme générale de segment de sphère. Cette portion d'extrémité évasée 12A délimite une cavité interne semi-sphérique à l'intérieur de laquelle l'embout cylindrique 20 peut être reçu.

De préférence, le premier composant 12 et l'organe mâle 16 comprennent une configuration mutuelle apte à réaliser une première liaison d'étanchéité 26 schématiquement localisée sur **la** **figure 4** par un cercle en trait discontinu. Par exemple, le premier composant 12 et l'organe mâle 16 délimitent à l'état assemblé un évidement périphérique 24 de réception d'un premier joint d'étanchéité 28 pour former la première liaison d'étanchéité 26. Ceci permet de réaliser un assemblage étanche par serrage radial dudit joint d'étanchéité 28.

Cette première liaison mécanique d'étanchéité 26 entre le premier composant 12 et l'organe mâle 16 résulte essentiellement de forces d'appui s'exerçant entre ces deux pièces par l'intermédiaire du premier joint d'étanchéité 28. Le joint d'étanchéité 28 crée par exemple une surépaisseur s'étendant légèrement en-dehors de la gorge 24 et s'y trouve ainsi comprimé lors du montage du premier composant 12 et de l'organe mâle 16.

Ce joint d'étanchéité 28 est par exemple un joint torique en élastomère qui est aplati (comprimé) entre deux faces cylindriques d'appui prévues respectivement sur chacune des deux pièces. De préférence, en l'absence du joint torique 28, l'organe mâle 16 peut librement coulisser à l'intérieur de la cavité réceptrice 12A du premier composant 12 : en présence du joint d'étanchéité 28, l'organe mâle 16 ne peut coulisser dans la cavité 12A que sous l'action d'un effort suffisant. Dans une variante de l'invention, le joint annulaire d'étanchéité 28 peut être de type à lèvre ou à section quadrilobe.

Dans l'exemple illustré sur **la** **figure 3****,** l'embout cylindrique 20 de l'organe mâle 16 destiné à être emmanché à l'intérieur de la portion d'extrémité 12A du premier composant 12 comporte sur sa paroi externe une gorge circonférentielle 24 de réception du joint d'étanchéité 28. Par ailleurs, de préférence, la paroi interne de l'embout cylindrique 20 présente en extrémité un léger chanfrein, facilitant ainsi son insertion à l'intérieur du premier composant 12. La gorge 24 est par ailleurs ménagée, comme cela est visible sur **les** **figures 4 à 6****,** dans cette portion d'extrémité chanfreinée de l'embout cylindrique 20.

En outre, conformément à l'invention, l'organe mâle 16 est également assemblé au deuxième composant 14. A cet effet, de préférence, la tête d'extrémité 18 est pourvue d'une portion d'extrémité à expansion radiale élastique pour son assemblage autour du deuxième composant 14. Par exemple, la tête 18 est fendue en extrémité et est par exemple munie dans cette portion d'ouvertures 30 ou fentes axiales autorisant l'expansion élastique radiale pour autoriser une déformation élastique permettant son emmanchement autour du deuxième composant 14.

La tête d'extrémité 18 est pourvue en outre de préférence d'un rebord interne d'extrémité 32 faisant saillie radialement vers l'intérieur, en forme par exemple de crochet annulaire. Le deuxième composant 14 comprend en outre un relief 34, par exemple circonférentiel, en forme générale de bourrelet ou de collet d'encliquetage pour assurer la rétention axiale de l'organe mâle 16 sur le bourrelet 34 après son retour élastique.

Lors de son emmanchement autour du deuxième composant 14, l'organe mâle 16 coopère avec le bourrelet 34 par déformation élastique pour permettre le franchissement du bourrelet 34 par un fléchissement du crochet 32 annulaire et ainsi obtenir un encliquetage en force. Afin de faciliter l'opération d'encliquetage, comme cela est visible sur **la** **figure 4****,** le collet 34 et le crochet 32 peuvent être pourvus de surfaces chanfreinées de telle façon que les chanfreins s'engagent et coopèrent mutuellement lors de l'opération d'encliquetage.

Bien entendu, l'assemblage de l'organe mâle 16 et du deuxième composant tubulaire 14 peut être réalisé différemment sans sortir pour autant du cadre de l'invention.

En outre, de préférence, l'organe mâle 16 et le deuxième composant 14 comprennent une configuration mutuelle apte à réaliser une deuxième liaison d'étanchéité 36 dans le dispositif 10 (**figure 4**). Ainsi, dans l'exemple, un deuxième joint d'étanchéité 38 est interposé entre l'organe mâle 16 et le deuxième composant 14 pour réaliser la liaison étanche 36 en aval du dispositif 10. Dans l'exemple, cette deuxième liaison étanche 36 a pour but d'assurer l'étanchéité de la liaison annulaire du dispositif 10, comme cela va être décrit plus en détail ci-après.

Comme cela est illustré sur **les** **figures 4 à 6****,** dans une configuration après assemblage, une zone localisée 40 de la paroi interne de l'organe mâle 16 est agencée pour venir appuyer contre le joint d'étanchéité 38 et le comprimer, par exemple lors du retour élastique d'encliquetage, après franchissement du relief 34, par la tête d'extrémité 18. Eventuellement, bien que cela ne soit pas illustré sur les figures, l'organe mâle 16 peut être pourvu dans sa zone localisée 40 d'une portée annulaire légèrement bombée configurée pour venir comprimer par contact le joint 38.

A cet effet, par exemple, le deuxième composant 14 comprend sur sa paroi externe une paire de nervures circonférentielles 42 en saillie radiale délimitant entre elles une gorge circonférentielle 44 pour recevoir le deuxième joint d'étanchéité 38. De préférence, le joint d'étanchéité 38 est un joint annulaire élastomère de type torique, à lèvre ou de section quadrilobe.

L'organe mâle 16 est configuré pour se déplacer axialement à l'intérieur d'une course prédéfinie limitée d'une part par le relief amont 42 et d'autre part par le relief aval 34 formé dans cet exemple par le bourrelet d'encliquetage 34 de la tête d'extrémité 18. De préférence, afin de régler son insertion axiale, l'organe mâle 16 comporte sur sa paroi interne un épaulement 46 interne configuré pour venir en butée axiale contre le relief externe 42 ménagé en amont sur la paroi externe du deuxième composant 14.

Conformément à l'invention et comme cela est illustré à **la** **figure 3****,** le deuxième composant tubulaire 14 comporte un deuxième organe d'articulation femelle 50. Ce deuxième organe d'articulation femelle 50 comporte un siège complémentaire recevant de manière mobile à l'intérieur la tête d'extrémité 18 du premier organe 16.

Ce deuxième organe femelle 50 a, dans l'exemple décrit, une forme générale d'anneau ou de bague et présente une forme de segment de portion sphérique présentant une extrémité de grand diamètre 54 et une extrémité de plus petit diamètre 52 (**figure 3**). Ce deuxième organe femelle 50 est destiné à être monté autour du deuxième composant 14, par insertion axiale du deuxième composant 14 au travers de l'orifice de la bague. De préférence, à l'assemblage, l'extrémité 52 de plus petit diamètre est tournée vers le deuxième composant 14 et l'extrémité 54 de plus grand diamètre est tournée vers le premier composant 12.

Le premier organe mâle 16 ayant un profil partiellement sphérique et le deuxième organe 50 ayant également un profil partiellement sphérique, le premier organe 16 a un diamètre extérieur sensiblement égal au diamètre intérieur de l'organe femelle 50, de telle manière que l'organe mâle 16 puisse être emboîté à l'intérieur de l'organe femelle 50 afin de former une liaison rotule. Comme cela est notamment visible sur **les** **figures 4 à 6** en coupe axiale, la tête d'extrémité 18 présente une courbure extérieure complémentaire de la courbure intérieure de l'organe femelle 50.

Tout en étant monté autour du deuxième composant 14 de façon libre et séparable, l'organe femelle 50 est assemblé également au premier composant 12. De préférence, l'assemblage est réalisé par un encliquetage en force de son bord d'extrémité de plus grand diamètre 54 sur un relief du premier composant 12.

A cet effet, dans l'exemple décrit, l'organe femelle 50 est pourvu du côté amont 54 d'un rebord annulaire intérieur 56 en saillie radiale formant un crochet annulaire de type encliquetage, s'étendant de préférence circonférentiellement et le premier composant 12 est pourvu d'un rebord externe 58 en saillie radiale également configuré pour coopérer avec le rebord 56 de l'organe femelle 50 par franchissement. En outre, l'organe femelle 50 comprend une portion à expansion radiale élastique pour faciliter l'encliquetage en force. Par exemple, l'organe femelle 50 comprend une pluralité de fentes axiales 53 sur son bord d'extrémité 54. En variante, le rebord saillant 56 peut comporter une pluralité de crochets, par exemple trois, formant des secteurs angulaires d'encliquetage régulièrement répartis.

Conformément à l'invention, l'organe femelle 50 est relié au premier composant 12 par-dessus l'organe mâle 16 de telle sorte que les deux pièces tubulaires 12 et 14 soient retenues entre elles par l'entrecroisement mutuel des organes mâle 16 et femelle 50. En outre, l'organe mâle 16 est configuré pour être relié au deuxième composant 14 en passant au travers de l'organe femelle 50.

Afin de réaliser une indexation angulaire des deux composants tubulaires 12 et 14 entre eux comme cela peut s'avérer utile dans certains aménagements de circuit tubulaire, le dispositif 10 comprend de préférence des moyens 60 d'indexation angulaire des deux composants tubulaires 12, 14 selon une direction circonférentielle configurés pour orienter relativement en rotation les deux composants 12, 14 tout en laissant de préférence un jeu circonférentiel autorisant une rotation relative des deux composants 12 et 14 selon la direction circonférentielle.

Les moyens d'indexation 60 comprennent par exemple un premier couple 62 d'indexation relative du premier composant 12 et de l'organe femelle 50. Ce premier couple 62 est par exemple composé d'un doigt d'indexation 62A et d'une encoche 62B configurés pour coopérer l'un dans l'autre avec un jeu circonférentiel. Le doigt 62A est par exemple formé par un ergot radial, porté par le premier composant 12 au voisinage de son bord d'extrémité périphérique 58. L'encoche 62B est par exemple ménagée sur l'organe femelle 50 du côté de son bord d'extrémité 54 de plus grand diamètre. Lors du montage, l'organe femelle 50 est tournée de façon à faire coïncider axialement l'encoche 62B et l'ergot 62A ce qui permet d'indexer le premier composant 12 et l'organe femelle 50.

En outre, les moyens d'indexation 60 comprennent dans cet exemple un deuxième couple 64 d'indexation relative du deuxième composant 14 et de l'organe femelle 50. Par exemple, le deuxième couple 64 est composé d'un ergot 64A et d'une encoche 64B. L'ergot 64A est porté par le deuxième composant 14 et l'encoche 64B est ménagée dans l'organe femelle 50. L'ergot 64A s'étend radialement par exemple à partir du relief 34 d'encliquetage de la tête d'extrémité 18. La rotation relative du deuxième composant 14 et de l'organe femelle 50 pour mettre en coïncidence l'encoche 64B et l'ergot 64A permet la réalisation d'une indexation angulaire de ces deux pièces.

On a représenté sur **les** **figures 9 à 12****,** un deuxième mode de réalisation du dispositif de liaison articulée. Dans ce second mode de réalisation, les éléments analogues à ceux du premier mode de réalisation illustré portent des références identiques.

Dans ce deuxième mode de réalisation, le moyen d'indexage angulaire 62 entre le premier composant 12 et l'organe femelle 50 est réalisé par des bords d'extrémité complémentaires crénelés 70 et 72 comprenant une succession de dents et de creux. Dans l'exemple décrit, le premier composant 12 comprend des crans de verrouillage 74 en saillie radiale et l'organe femelle 50 comprend des évidements 76 configurés pour recevoir à l'intérieur les crans de verrouillage 74. Les crans de verrouillage 74 sont par exemple répartis circonférentiellement sur les dents du bord crénelé 70 du premier composant 12 et les évidements 76 sont répartis circonférentiellement sur les dents du bord crénelé 72 de l'organe femelle 50. Les crans 74 comprennent par exemple une forme de rampe s'étendant dans sa direction longitudinale selon la direction circonférentielle du premier composant 12 afin de faciliter la mise en prise des deux pièces 12 et 50.

L'immobilisation relative en rotation du premier composant 12 et de l'organe femelle 50 se fait en deux étapes : d'une part, engagement mutuel des bords d'extrémité complémentaires 72, 70 l'un dans l'autre en faisant coïncider les creux de l'un des bords crénelé avec les dents de l'autre des bords crénelé puis d'autre part, action de verrouillage rotative d'une fraction de tour pour amener en prise d'accouplement les crans 74 de verrouillage à l'intérieur des évidements 76.

On va maintenant décrire en référence **aux** **figures 1 à 8****,** les principaux aspects de fonctionnement d'un dispositif de liaison articulée 10 selon le premier mode de réalisation.

Initialement, le dispositif de liaison articulée 10 est à l'état démonté représenté sur **la** **figure 3****.**

Au cours d'une première étape illustrée **en** **figure 7**, le premier joint d'étanchéité 28 est positionné sur le premier organe mâle 16 à l'endroit de la gorge circonférentielle 24 parcourant l'embout 20. De même, le deuxième joint d'étanchéité 38 est positionné sur le deuxième composant 14 à l'endroit de la gorge circonférentielle 44. Par la suite, l'organe femelle 50 est enfilé autour du deuxième composant 14 par son bord d'extrémité 52 de plus petit diamètre. Une rotation relative de l'organe femelle 50 et du deuxième composant 14 permet de faire coïncider l'ergot 64A avec l'encoche 64B et ainsi de réaliser une indexation angulaire de ces deux pièces entre elles.

Au cours d'une deuxième étape illustrée par **la** **figure 8****,** l'organe mâle 16 est emmanché autour du deuxième composant 14 jusqu'à provoquer le fléchissement du crochet 32 puis le franchissement par ce dernier de la saillie radiale 34 circonférentielle du deuxième composant 14. Lors de cet emmanchement, la zone annulaire 40 vient appuyer et comprimer le deuxième joint d'étanchéité 38 à l'intérieur de la gorge circonférentielle 44.

Enfin, au cours de la dernière étape, le premier composant 12 et l'ensemble déjà pré-assemblé formé par le deuxième composant 14, l'organe mâle 16, et l'organe femelle 50, sont assemblés entre eux. Ainsi, le repère d'indexation 62A du premier composant 12 est pré-positionné en regard de l'encoche 62B prévue sur l'organe femelle 50. L'organe femelle 50 est alors élastiquement déformé radialement pour venir s'encliqueter par-dessus le rebord saillant 58 d'extrémité du premier composant 12 prévu à cet effet.

Cet entrecroisement d'encliquetage permet de relier entre eux les deux composants tubulaires 12 et 14 tout en laissant un jeu de mouvement permettant des mouvements angulaires et linéaires selon l'axe principal XX. Par exemple, en référence à **les** **figures 2** **et** **6****,** le deuxième composant 14 peut être légèrement pivoté (axe XX'). En outre, l'insertion axiale de l'organe mâle 16 peut être réglée à l'intérieur d'une course axiale prédéfinie entre une position extrême illustrée sur **la** **figure 5** et une position extrême dans laquelle l'organe 16 vient butée avec son épaulement 46 contre un relief du deuxième composant 14.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Dispositif (10) de liaison articulée, du type comprenant des premier (12) et deuxième (14) composants tubulaires autour d'un axe principal (XX), les premier (12) et deuxième (14) composants comprenant respectivement un premier organe d'articulation mâle (16) séparable pourvu d'une tête d'extrémité (18) en forme de segment sphérique et un deuxième organe d'articulation femelle (50) séparable pourvu d'un siège (32) complémentaire recevant de manière mobile à l'intérieur la tête d'extrémité (18) du premier organe (16), **caractérisé en ce que** le premier organe (16) est configuré pour être logé au moins partiellement à l'intérieur du premier composant (12) et pour être assemblé au deuxième composant (14) au travers du deuxième organe (50) **en ce que** le deuxième organe (50) est configuré pour être monté autour du deuxième composant (14) et assemblé au premier composant (12) par-dessus le premier organe (16) de telle sorte que les deux composants tubulaires (12, 14) soient assemblés entre eux par l'entrecroisement réciproque des deux organes d'articulation (16, 50) **et en ce que** la tête d'extrémité (18) est pourvue d'une portion à expansion radiale élastique pour son assemblage autour du deuxième composant (14) et le deuxième composant (14) comprend un relief aval (34) formant un bourrelet ou collet de retenue axiale de la tête d'extrémité (18).

2. Dispositif (10) selon la revendication précédente, comprenant des moyens (60) d'indexation angulaire des deux composants tubulaires (12, 14) selon une direction circonférentielle configurés pour orienter et/ou immobiliser en rotation relativement les deux composants (12, 14).

3. Dispositif (10) selon l'une quelconque des revendications précédentes, dans lequel le deuxième organe (50) comprend une portion à expansion radiale élastique pour son assemblage sur le premier composant (12) et le premier composant (12) comprend un rebord en saillie radiale externe (58) de retenue axiale du deuxième organe (50).

4. Dispositif (10) selon l'une quelconque des revendications précédentes, dans lequel le premier organe (16) est configuré pour se déplacer axialement le long du deuxième composant (14) à l'intérieur d'une course prédéfinie entre des positions extrêmes amont et aval.

5. Dispositif (10) selon l'une quelconque des revendications précédentes, dans lequel le premier organe (16) comprend une paroi interne munie d'un épaulement radial (46) configuré pour venir en butée contre un premier relief amont (42) formé sur le deuxième composant (14).

6. Dispositif (10) selon la revendication précédente, dans lequel le deuxième composant (14) comprend un deuxième relief aval (34) de retenue axiale du premier organe mâle (16).

7. Dispositif (10) selon la revendication précédente, dans lequel le deuxième organe (50) comporte un corps annulaire en forme générale de segment sphérique.

8. Dispositif (10) selon la revendication précédente, dans lequel le premier composant (12) est pourvu d'une extrémité évasée (12A) en forme de segment sphérique configurée pour s'étendre, dans l'état monté, sensiblement dans le prolongement axial du segment sphérique du deuxième organe (50).

9. Dispositif (10) selon l'une quelconque des revendications précédentes, dans lequel le premier organe mâle (16) et le premier composant (12) comprennent une configuration mutuelle apte à réaliser une première liaison d'étanchéité amont (26) du dispositif (10).

10. Dispositif selon la revendication précédente, dans lequel le premier organe mâle (16) et le deuxième composant (14) comprennent une configuration mutuelle apte à réaliser une deuxième liaison d'étanchéité aval (36) du dispositif (10).

11. Dispositif (10) selon l'une quelconque des revendications précédentes, dans lequel le premier composant (12) et le deuxième organe femelle (50) comprennent chacun un bord d'extrémité (70, 72) délimitant circonférentiellement des éléments d'encastrement complémentaires en saillie et en creux configurés pour que les bords d'extrémités (70, 72) puissent s'engager mutuellement l'un dans l'autre et être assemblés par une action rotative de verrouillage d'une fraction de tour prédéfinie.
